# EUROPÄISCHE PATENTSCHRIFT

(11) **EP 2 541 110 B1**
(45) Veröffentlichungstag und Bekanntmachung des Hinweises auf die Patenterteilung: **09.12.2015**
(21) Anmeldenummer: 12174360.3
(22) Anmeldetag: 29.06.2012
(51) Int. Cl.: B60G 17/052, F16K 11/07, B60G 17/04, F15B 13/04

(54) **Pneumatisches Ventil in Schieberbauart**
Pneumatic valve in a slider design
Valve pneumatique du type à piston

(30) Priorität: 01.07.2011 DE 102011051506
(43) Veröffentlichungstag der Anmeldung: 02.01.2013
(73) Patentinhaber: Haldex Brake Products GmbH, 69123 Heidelberg (DE)
(72) Erfinder: Becke, Stefan, 68804 Altlussheim (DE); Tschöke, Tobias, 69121 Heidelberg (DE); Schneider, Wolfgang, 69117 Heidelberg (DE)
(74) Vertreter: REHBERG HÜPPE + PARTNER

(56) Entgegenhaltungen:
- EP-A1- 0 076 664
- DE-A1-102009 045 734
- DE-B3-102006 052 550

## Beschreibung

### TECHNISCHES GEBIET DER ERFINDUNG

Die Erfindung betrifft ein pneumatisches Ventil in Schieberbauart für eine Druckluftanlage eines Nutzfahrzeugs, wobei dieses Ventil eine beliebige Zahl von Anschlüssen und Schaltstellungen besitzen kann und beispielsweise manuell, elektrisch, pneumatisch und/oder elektropneumatisch betätigt sein kann. Weiterhin betrifft die Erfindung ein Verfahren zur Montage eines derartigen Ventils.

### STAND DER TECHNIK

Bekannte pneumatische Ventile in Schieberbauart für Druckluftanlagen eines Nutzfahrzeugs verfügen über eine Ausnehmung eines unter Umständen mehrteiligen Gehäuses, in welcher in eine axiale Richtung verschieblich ein Ventilschieber geführt ist. Derartige Ventile verfügen über zwei oder mehr Ventilkammern. In einer axialen Stellung des Ventilschiebers sind benachbarte Ventilkammern voneinander getrennt, indem eine Steuerkante dichtend an einer Mantelfläche des Ventilschiebers anliegt. Mit Veränderung der axialen Stellung des Ventilschiebers kann diese dichtende Wechselwirkung zwischen der Steuerkante und der Mantelfläche des Ventilschiebers aufgehoben werden. Hierdurch wird ein die Steuerkante umgehender Bypass geschaffen, der eine Verbindung der Ventilkammern gewährleistet. Letztendlich kann somit mittels des Ventils in Schieberbauart je nach Stellung des Ventilschiebers eine Verbindung oder Absperrung von unterschiedlichen Anschlüssen des pneumatischen Ventils erfolgen, die in die genannten Ventilkammern münden.

Werden die Steuerkanten unmittelbar von der Ausnehmung des Gehäuses oder mittels in Ringnuten der Ausnehmung des Gehäuses eingelegten O-Ringen gebildet, stellt dies hohe Anforderungen an die Fertigung des Gehäuses mit der mindestens einen Ringnut sowie die Montage des pneumatischen Ventils. Insbesondere zur Vereinfachung der Herstellung und Montage ist eine auch als "Hülsentechnik" bezeichnete Ausgestaltung für die Ausbildung der Steuerkanten eines pneumatischen Ventils in Schieberbauart vorgeschlagen worden, vgl. insbesondere DE 10 2009 045 734 A1 der Anmelderin. Hierbei wird die (mindestens eine) Steuerkante bereitgestellt durch eine separat gefertigte Steuerkanteneinheit, welche hier mit zwei Stützringscheiben und einem zwischen den gehaltenen Dichtelement ausgebildet ist. In eine dann unter Umständen vereinfachte, insbesondere zylindrische oder kegelstumpfförmige Ausnehmung des Gehäuses werden mehrere Steuerkanteneinheiten sukzessive eingesetzt, wobei diese über zwischengeordnete käfigartige Abstandselement auf einem vorbestimmten axialen Abstand von einander gehalten werden, welcher dann der axialen Erstreckung der auf diese Weise gebildeten Ventilkammern entspricht. Auch infolge einer axialen Verspannung des Dichtelements zwischen den beiden Stützringscheiben kommt das Dichtelement radial außenliegend unter Abdichtung zur Anlage an die Ausnehmung des Gehäuses, während das Dichtelement radial innenliegend für die axiale Stellung des Ventilschiebers, in welcher die Trennung der benachbarten Ventilkammern erfolgt, unter Abdichtung an der Mantelfläche des Ventilschiebers anliegt.

DE 26 09 406 A1 offenbart ein Ventil in Schieberbauart, in dem der Schieber mit einer Hülse ohne Einsatz von Dichtelementen Steuerkanten ausbildet, sodass dieses Ventil ausschließlich für hydraulische Fluide geeignet ist. Mehrere Ventilkammern dieses Ventils sind gebildet zwischen dem abgestuften Steuerschieber und einer sich durchgehend über die mehreren Ventilkammern erstreckenden Hülse. Die Hülse besitzt radiale Bohrungen, die der Verbindung von Anschlüssen des Ventils mit den Ventilkammern dienen. Der Übergang der Hülse zu einem Gehäuse des Ventils im Umgebungsbereich der Kanäle ist abgedichtet durch Dichtelemente, welche in einem Ringraum zwischen Hülse und Gehäuse angeordnet sind. Diese Dichtelemente sind gefangen zwischen Abstandselementen, welche axial dadurch gesichert, dass diese zwischen einem Absatz der Hülse und einer mit der Ausnehmung des Gehäuses verschraubten Wellenmutter verspannt sind.

Aus GB 817,473 ist ein Ventil in Schieberbauart bekannt, bei welchem die von einem Dichtelement gebildete Steuerkante von einer Steuerkanteneinheit gebildet ist, deren axiale Position mit einem Abstandselement vorgegeben ist. Mehrere Steuerkanteneinheiten mit zugeordneten Abstandselementen sind hierbei in der Ausnehmung des Ventils aus Herstellungs- und Montagegründen zwischen zwei Verschlussdeckeln verspannt. Die Verschlussdeckel besitzen einen konstruktiv fest vorgegebenen Abstand, da die Deckel bis zu einem Anschlag in das Gehäuse des Ventils eingeschraubt werden müssen. Eine Veränderung der Toleranzen von Abstandselementen und Steuerkanteneinheiten führt zu einer Veränderung der Vorspannung der Steuerkanteneinheit, was Funktionsbeeinträchtigungen des Ventils zur Folge haben kann.

### AUFGABE DER ERFINDUNG

Der Erfindung liegt die Aufgabe zugrunde, ein pneumatisches Ventil in Schieberbauart, in welchem mindestens eine Steuerkanteneinheit Einsatz findet, deren axiale Position durch ein Abstandselement vorgegeben ist, hinsichtlich
- des Herstellungsaufwands,
- des Montageaufwands,
- der Betriebssicherheit und/oder
- der Dauerfestigkeit
zu verbessern. Weiterhin liegt die Erfindung die Aufgabe zugrunde, ein Verfahren zur Montage eines pneumatischen Ventils in Schieberbauart vorzuschlagen, welches zu einer Vereinfachung der Montage, Verringerung des Herstellungsaufwands, einer Erhöhung der Betriebssicherheit und/oder einer Erhöhung der Dauerfestigkeit führt.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Der vorliegenden Erfindung liegt die Erkenntnis zugrunde, dass das exakte Positionieren der Steuerkanteneinheiten sowie der Abstandselemente in dem Ventil sowie die Vorgabe einer Vorspannung der Steuerkanteneinheit von großer Bedeutung ist:
a) Befindet sich für die Fertigung mehrerer pneumatischer Ventile in Schieberbauart die Steuerkanteneinheit toleranzbedingt an unterschiedlichen axialen Positionen, kann dies zu unerwünschten Veränderungen und Schwankungen der Ventilcharakteristik bei unterschiedlichen gefertigten Ventilen führen. Im einfachsten Fall verändert sich die axiale Stellung des Ventilschiebers, bei welcher eine Verbindung oder Trennung der benachbarten Ventilkammern erfolgt. Schlimmstenfalls kann die Funktion des Ventils grundlegend beeinträchtigt sein, indem in einer axialen Stellung des Ventilschiebers, in welcher an sich eine Trennung oder Verbindung von Ventilkammern erfolgen soll, diese Trennung oder Verbindung nicht oder nur teilweise gewährleistet ist.
b) Von Bedeutung ist des Weiteren die Vorspannung der Steuerkanteneinheit und hiermit des Dichtelements. Diese Vorspannung beeinflusst die Anpresskraft des Dichtelements radial innen liegend an den Ventilschieber. Hiervon wiederum abhängig ist die Reibkraft, entgegen welcher eine Betätigung des Ventilschiebers erfolgen muss, so dass u. U. auch mittelbar über die Vorspannung der Steuerkanteneinheit eine Beeinflussung der Ventilcharakteristik erfolgen kann. Ist die Vorspannung zu hoch, können sich zu große erforderliche Betätigungskräfte für den Ventilschieber ergeben. Ist hingegen die Vorspannung zu klein, kann die Anpresskraft des Dichtelements an die Mantelfläche des Ventilschiebers unter Umständen nicht ausreichend sein, um die Abdichtung zwischen der Mantelfläche des Ventilschiebers und dem Dichtelement zu gewährleisten, wodurch grundsätzlich die Funktion des Ventils beeinträchtigt ist.
c) Von weiterer Bedeutung ist die radiale Anpressung des Dichtelements an den Ventilschieber bei Durchmesser- und Querschnittsveränderungen des Steuerschiebers, beispielsweise im Bereich von einem Bypass bildenden Ringnuten oder Längsnuten. Der wiederholte Betrieb des Ventils führt in den genannten Bereichen zu einer Beanspruchung des Dichtelements, welche zu einem Verschleiß des Dichtelements und/oder einer Undichtigkeit des Dichtelements führen können. Auch diese technischen Gegebenheiten erfordern eine exakte Vorgabe der Vorspannung der Steuerkanteneinheit.
d) Entsprechendes gilt für die Wechselwirkung des Dichtelements der Steuerkanteneinheit radial außenliegend mit der Ausnehmung des Gehäuses. Ergibt sich hier eine zu große radiale Verpressung, kann dies die Montage der Steuerkanteneinheit in die Ausnehmung erschweren, wobei auch Beschädigungen des Dichtelements während der Montage nicht ausgeschlossen werden können. Andererseits muss die radiale Verspannung des Dichtelements radial außenliegend so groß sein, dass die Dichtigkeit gewährleistet ist zur Vermeidung eines Druckausgleichs zwischen den benachbarten Ventilkammern zwischen Dichtelement und der die Ausnehmung des Gehäuses begrenzenden Innenfläche.
e) Eine weitere mögliche Randbedingung stellt die axiale Steifigkeit der Steuerkanteneinheiten sowie des Abstandselements dar. Für hypothetisch sehr weiches, nicht vorgespanntes Dichtelement hätte eine axiale Bewegung des Ventilschiebers bei zwischen Ventilschieber und Dichtelement wirkender Reibung zur Folge, dass das Dichtelement über einen gewissen axialen Weg an dem Ventilschieber haften könnte und von diesen mitgenommen werden kann, was unerwünscht ist. Auch eine Vermeidung dieses Phänomens kann eine definierte Vorspannung der Steuerkanteneinheit erfordern.

Dem erläuterten Spannungsfeld tragen aus dem Stand der Technik bekannte Lösungen dadurch Rechnung, dass zunächst die axialen Toleranzen für die beteiligten Bauelemente, insbesondere die axiale Abmessung des Abstandselements, der Steuerkanteneinheit sowie der Ausnehmung, eng vorgegeben werden, womit dann auch eine Vorgabe der axialen Positionen und der Vorspannung innerhalb der sich kumulierenden Toleranzen erfolgt. Dies führt allerdings zu erhöhten Fertigungskosten, ohne dass zwingend eine ausreichende Vorgabe der axialen Positionen der Steuerkanteneinheit und des Abstandselements sowie der Vorspannung der Steuerkanteneinheit gewährleistet ist. Die genannten Probleme vergrößern sich mit einer Erhöhung der Zahl der möglichen axialen Positionen des Ventilschiebers, der Zahl der Steuerkanteneinheiten und der Abstandselemente.

Bekannt sind weiterhin Ausführungsformen, bei welchen die Steuerkanteneinheit und das Abstandselement über eine vorgespannte Axialfeder abgestützt sind, um einen Toleranzausgleich zu gewährleisten. Im Betrieb des Ventils wirkende Axialkräfte, die durch die Reibung des Steuerschiebers mit den Steuerkanten hervorgerufen werden oder in der Ventilkammer nach außen gerichtet infolge des Drucks in der Ventilkammer auf die Steuerkanteneinheiten wirken, führen aber zu einer Veränderung der Vorspannung der Axialfeder, so dass eine Positionsänderung der Steuerkanteneinheit und des Abstandselements erfolgt, eine Veränderung der Vorspannung des Dichtelements erfolgt und sich eine undefinierte Lage des Dichtelements hinsichtlich der Steuerkanteneinheit, der Ausnehmung und des Ventilschiebers ergeben kann, was zu unerwünschten zusätzlichen mechanischen Beanspruchungen des Dichtelements und zu Undichtigkeiten führen kann.

Schließlich ist es bekannt, in einer Serienfertigung des Ventils die in einem einzelnen Ventil eingesetzten Bauelemente individuell zu vermessen, um die jeweils vorliegenden kumulierten Toleranzabweichungen zu ermitteln, welche dann durch Einlegen von zusätzlichen Toleranzscheiben, die beispielsweise eine Dicke im Bereich von 10-tel Millimetern besitzen können, ausgeglichen werden müssen. Dies ist sehr aufwendig mit einer Erhöhung des Messaufwands, des Montageaufwands und der Herstellungskosten.

Ohne dass die erfindungsgemäß vorgeschlagenen Maßnahmen zwingend einigen oder sämtlichen der obigen Überlegungen Rechnung tragen müssen, findet erfindungsgemäß ein Einstellelement Einsatz, mittels dessen die axialen Positionen der Steuerkanteneinheit und des Abstandselements und/oder eine Vorspannung der Steuerkanteneinheit, insbesondere auch eine Vorspannung mindestens eines Dichtelements, welches an dem Steuerschieber anliegt und eine Steuerkante bildet, einstellbar ist. Hierbei umfasst die Erfindung sowohl ein Ventil, bei welchem lediglich eine Steuerkanteneinheit und/oder ein Abstandselement hinsichtlich der axialen Position und/oder der Vorspannung durch das Einstellelement beeinflusst wird, als auch Ventile, bei welchen über ein einziges Einstellelement eine gemeinsame Einstellung der axialen Positionen und/oder der Vorspannung mehrerer Steuerkanteneinheiten und Abstandselemente erfolgt. Erfindungsgemäß erfolgt somit ein Toleranzausgleich durch das Einstellelement je nach axialer Position desselben.

Des Weiteren findet erfindungsgemäß ein Sicherungselement Einsatz. Über das Sicherungselement ist das Einstellelement in unterschiedlichen axialen Positionen je nach der eingestellten axialen Position oder der eingestellten Vorspannung sicherbar. Hierbei kann die axiale Positionssicherung durch das Sicherungselement in axialen Stufen oder stufenlos im Rahmen der Erfindung erfolgen. Durch das Sicherungselement kann die mit der Montage eingenommene und gewünschte Position des Einstellelements gesichert werden, wobei auch im dauerhaften Betrieb des Ventils, beispielsweise in einem Nutzfahrzeug mit auftretenden Vibrationen, eine Veränderung der Position des Einstellelements durch das Sicherungselement vermieden ist.

Für ein Ausführungsbeispiel der Erfindung ist das Einstellelement ein axial bewegbares Einstellelement, beispielsweise ein Einpresselement, welches für unterschiedliche axiale Positionen der Steuerkanteneinheit und/oder unterschiedliche Vorspannungen der Steuerkanteneinheit unterschiedlich tief in die Ausnehmung des Gehäuses einbringbar oder einpressbar ist. Über die Einpresskraft kann beispielsweise auch die Vorspannkraft der Steuerkanteneinehit oder des Dichtelements vorgegeben werden. Hierbei ergibt sich die Vorspannkraft aus der Differenz aus der Einpresskraft und den dem Einpressen entgegenwirkenden Kräften (wie Reibungskräfte zwischen Einstellelement und Gehäuse u. ä.). Möglich ist, dass die erforderliche Einpresskraft empirisch ermittelt wird oder bei Kenntnis der wirkende Kraftverhältnisse auch analytisch ermittelt wird.

Unter einem Sicherungselement wird jedwede technische Maßnahme verstanden, mittels welcher eine Bewegung des Einstellelements aus einer über das Sicherungselement gesicherten Position erschwert oder vollständig verhindert ist. Um lediglich einige nicht beschränkende Beispiele zu nennen kann das Sicherungselement als Rast- oder Verriegelungseinrichtung, als Sicherungslack, als Verstemmung, formschlüssig, kraftschlüssig oder reibschlüssig ausgebildet sein.

In weiterer Ausgestaltung dieses Lösungsgedankens erfolgt eine Verriegelung oder Rastierung des Einstellelements oder Einpresselements in unterschiedlichen axialen Positionen über eine Rast- oder Verriegelungseinheit.

Für eine alternative Ausgestaltung des Einstellelements ist dieses als Schraubelement ausgebildet. In diesem Fall erfolgt die Einstellung der axialen Position der Steuerkanteneinheit und/oder der Vorspannung der Steuerkanteneinheit durch die Veränderung des Einschraubwinkels des Schraubelements. Entsprechend der Gewindesteigung kann eine unter Umständen auch feinfühlige Einstellbarkeit gewährleistet werden. Um lediglich ein Beispiel für eine erfindungsgemäße Ausgestaltung zu nennen, kann die Vorspannung der Steuerkanteneinheit vorgegeben werden, indem das Schraubelement mit einem definierten Einschraubmoment in das Ventil eingeschraubt wird. Hierbei kann das definierte Einschraubmoment empirisch ermittelt worden sein und/oder bei Kenntnis der wirkenden Kraft- oder Reibverhältnisse auch analytisch ermittelt worden sein. Eine Stirnseite des Schraubelements bildet hierbei vorzugsweise eine axiale Anlagefläche oder Vorspannfläche, welche mittelbar oder unmittelbar die axiale Position der Steuerkanteneinheit und/oder die Vorspannung der Steuerkanteneinheit vorgibt.

Für die Ausbildung des Schraubelements gibt es vielfältige Möglichkeiten. Beispielsweise kann eine Abstützung der Steuerkanteneinheit und/oder eines Abstandselements über einen Anschlag oder Ring erfolgen, welcher dann über mehrere über den Umfang verteilte Schraubelemente hinsichtlich der Position und Ausrichtung verändert werden kann. Eine besonders einfache Ausgestaltung der Erfindung ist allerdings gegeben, wenn das Schraubelement koaxial zu dem Ventilschieber in ein Gewinde der Aufnehmung eingeschraubt ist. In diesem Fall kann eine Stirnfläche oder ein Absatz des Schraubelements der Abstützung der Steuerkanteneinheit und des Abstandselements dienen, wobei der mit der Stirnfläche oder dem Absatz gebildete Abstützort sich mit Veränderung des Einschraubwinkels des Schraubelements in das Gewinde der Ausnehmung in axialer Richtung verlagert.

Als problematisch kann sich unter Umständen erweisen, wenn sich ein Einschraubmoment und die einschraubende Drehbewegung des Schraubelements überträgt auf die Steuerkanteneinheit und/oder das Abstandselement. Eine etwaige Torsion des Dichtelements könnte zu einer veränderten Dichtcharakteristik des Dichtelements und/oder zu Beschädigungen des Dichtelements führen. Ebenfalls möglich ist, dass eine Torsionsbeanspruchung des Dichtelements dazu führt, dass in einem Teilumfangsbereich des Dichtelements das Dichtelement stärker verspannt ist als in einem anderen Teilumfangsbereich, was zu einer uneinheitlichen Nutzung und Beanspruchung des Dichtelements führen kann und unter Umständen zu einer Undichtigkeit des Dichtelements in einem Teilumfangsbereich führen kann. In diesem Zusammenhang kann die Ausbildung der Steuerkanteneinheit mit zwei Stützringscheiben und einem dazwischen gehaltenen Dichtelement bereits vorteilhaft sein, da hier die wirkende Gleitreibung zwischen Abstandselement, Stützringscheiben und Dichtelement bereits für einen Ausgleich durch eine gleitende relative Rotationsbewegung gewährleistet. Gemäß einem weiteren Vorschlag der Erfindung kann zwischen einer Stirnseite des Schraubelements und einem Abstandselement oder einer Steuerkanteneinheit mindestens ein Gleitelement oder mindestens ein Gleitring zwischengeordnet sein, welcher eine Verdrehung des Abstandselements oder der Steuerkanteneinheit und eine Übertragung eines Anzugsmoments zumindest mindert. Beispielsweise kann eine Materialwahl und/oder Beschichtung des Gleitrings zur Reduzierung der Reibung gewählt sein, wodurch das auf die Steuerkanteneinheit(en) übertragene Anzugsmoment reduziert werden kann.

Grundsätzlich kann für das Schraubelement ein beliebiges Gewinde Einsatz finden. Insbesondere für die Ausbildung des Schraubelements und des hiermit zusammenwirkenden Gewindes des Gehäuses des Ventils aus Kunststoff schlägt die Erfindung vor, ein Trapezgewinde einzusetzen. Dieser Ausgestaltung liegt die Beobachtung zugrunde, dass beispielsweise für den Einsatz des erfindungsgemäßen Ventils im Zusammenhang mit der pneumatischen Beaufschlagung von Luftfederbälgen eines Nutzfahrzeugs in dem Ventil Drücke von bis zu 25 bar auftreten können. Im Fahrbetrieb des Nutzfahrzeugs kommt es infolge der Einfederung der Luftfederbälge zu beträchtlichen und unter Umständen auch stoßartigen dynamischen Veränderungen der wirkenden Drücke, welche auch in axialer Richtung auf die Steuerkanteneinheit wirken. Diese Kräfte müssen durch die Schraubverbindung zwischen Schraubelement und Gehäuse aufgenommen werden, was bevorzugt bei Einsatz eines Trapezgewindes gewährleistet werden kann, selbst dann, wenn ein Einsatz eines Kunststoffmaterials erfolgt.

Für einen besonderen Vorschlag der Erfindung wirkt das Sicherungselement zur Vermeidung einer Veränderung des Einschraubwinkels formschlüssig sowohl mit dem Schraubelement als auch mit dem Gehäuse zusammen.

In weiterer Ausgestaltung der Erfindung kann das Sicherungselement als eine Art Sicherungsring ausgebildet sein, dessen unrunde Innenfläche formschlüssig zusammenwirkt mit einer unrunden Mantelfläche des Schraubelements, während eine unrunde Außenfläche des Sicherungsrings formschlüssig zusammenwirkt mit einer unrunden Innenfläche des Gehäuses. Um hier eine Sicherung in unterschiedlichen relativen Lagen zwischen Schraubelement und Gehäuse je nach konkret vorliegenden Toleranzabweichungen zu ermöglichen, ist das formschlüssige Zusammenwirken zwischen der unrunden Innenfläche des Sicherungsrings und der unrunden Mantelfläche des Schraubelements für unterschiedliche relative Drehwinkel zwischen Sicherungsring und Schraubelement möglich und/oder das formschlüssige Zusammenwirken zwischen der unrunden Mantelfläche des Sicherungsrings und der unrunden Innenfläche des Gehäuses ist für unterschiedlich relative Drehwinkel zwischen Sicherungsring und Gehäuse möglich. Die Zahl der unterschiedlichen möglichen relativen Drehwinkel gibt dann die Zahl der möglichen Stufen für die Sicherung des Einschraubwinkels, bezogen auf eine vollständige Umdrehung des Schraubelements mit einem Winkel von 360° an.

Für eine Ausgestaltung der Erfindung ist mindestens eine unrunde Mantelfläche oder Innenfläche der Mantelfläche des Schraubelements, der Innenfläche des Sicherungsrings, der Außenfläche des Sicherungsrings oder der Innenfläche des Gehäuses als Verzahnung oder mit mindestens einem Fortsatz oder einer Ausnehmung ausgebildet.

Möglich ist auch, dass das Sicherungselement als Rast- oder Ratscheneinrichtung ausgebildet ist. Eine Ausbildung des Sicherungselements als Ratscheneinrichtung ermöglicht eine besonders einfache und zuverlässige Montage: Mit zunehmendem Einschrauben des Schraubelements durchläuft die Ratscheneinrichtung mehrere Rast-, Ratschen- oder Sicherungsstufen. Ist ein Einschraubwinkel erreicht, welcher mit der gewünschten axialen Positionierung und Vorspannung der Steuerkanteneinheit und/oder des Abstandselements korreliert, ist bereits "automatisch" eine Rastierung oder ratschenartige Sicherung in unmittelbarer Umgebung des genannten Einschraubwinkels herbeigeführt.

Grundsätzlich kann die erfindungsgemäß eingesetzte Steuerkanteneinheit beliebig ausgebildet sein, sofern diese die Funktion der Bildung einer Steuerkante und Abdichtung der Ventilkammern in den jeweiligen Stellungen des Ventilschiebers gewährleistet. Beispielsweise kann hierzu die Steuerkanteneinheit mindestens einen Grundkörper besitzen, an welchem mindestens ein Dichtelement gehalten ist. Denkbar ist, dass zwei Dichtelemente in der Steuerkanteneinheit Einsatz finden, wobei ein Dichtelement zuständig ist für die Erzielung der Dichtwirkung radial innen liegend gegenüber dem Ventilschieber, während das andere Dichtelement verantwortlich ist zur Abdichtung der Steuerkanteneinheit gegenüber der die Ausnehmung begrenzenden Innenfläche des Gehäuses. Die Steuerkanteneinheit kann hierbei mit lediglich einem Bauelement, welches die erforderliche Dichtwirkung erzeugt, oder mit mehreren Bauelementen gebildet sein. Für eine besondere Ausgestaltung der Erfindung ist die Steuerkanteneinheit mit einem Dichtelement oder auch zwei Dichtelementen gebildet, welches oder welche zwischen zwei Stützringscheiben gehalten und/oder vorgespannt ist/sind. Die Stützringscheiben können hier zur Kraftübertragung zwischen benachbarten Bauelementen wie insbesondere Abstandselementen, zur axialen und/oder radialen Positionsvorgabe des Dichtelements, zur Vorgabe elastischer Verformungswege des Dichtelements infolge der Vorspannung, zur Bereitstellung geeigneter Anlageflächen für das Dichtelement und ähnliches dienen. Die genannten Stützringscheiben können dabei separat von den Abstandselementen ausgebildet sein oder integraler Bestandteil der Abstandselemente sein.

Möglich ist des Weiteren, dass das Einstellelement lediglich die Funktion hat, die axiale Position der Steuerkanteneinheit und des Abstandselements und/oder die Vorspannung einzustellen. Bspw. kann eine Abstützung einer einen Ventilschieber beaufschlagenden Feder und/oder eine abdichtende Führung eines den Ventilschieber betätigenden Steuerkolbens unabhängig von dem Einstellelement oder Schraubelement erfolgen. Möglich ist aber auch, dass das Einstellelement oder Schraubelement zusätzliche Funktionen erfüllt. Um lediglich ein Beispiel zu nennen, kann das Einstell- oder Schraubelement zur Abstützung einer den Ventilschieber beaufschlagenden Feder dienen, der Abdichtung der Ausnehmung gegenüber der Umgebung dienen u. ä. Für eine besondere Ausgestaltung der Erfindung besitzt das Einstell- oder Schraubelement eine zylindrische Innenfläche, die genutzt wird, um einen den Ventilschieber betätigenden Steuerkolben abdichtend zu führen. Somit begrenzt die zylindrische Innenfläche radial außenliegend einen Steuerraum für den Steuerkolben. Gleichzeitig bildet die zylindrische Innenfläche eine Dicht- und Führungsfläche für den Steuerkolben. Diese Ausgestaltung ermöglicht eine besonders kompakte Bauweise des erfindungsgemäßen Ventils.

In einer besonderen Ausgestaltung der Erfindung ist das zwischen den beiden Stützringscheiben gehaltene Dichtelement in einem Halbquerschnitt in erster Näherung hantelförmig ausgebildet, bei welchem zwei radial ineinander geschachtelte O-ringförmige Dichtringe über einen radialen Steg miteinander verbunden sind. Hierbei kann der außenliegende O-ringförmige Dichtring die Abdichtung gegenüber der die Ausnehmung begrenzenden Innenfläche gewährleisten, während der innenliegende O-ringförmige Dichtring mit der Mantelfläche des Ventilschiebers in Wechselwirkung tritt.

Die Bauelemente des erfindungsgemäßen Ventils können mit beliebigen Materialien einschließlich Verbundmaterialien hergestellt sein, wobei die einzelnen Bauelemente aus gleichen oder unterschiedlichen Materialien hergestellt sein können. In einer besonderen Ausgestaltung der Erfindung ist das Gehäuse des Ventils, der Ventilschieber und/oder das Einstell- oder Schraubelement aus Kunststoff hergestellt, woraus sich ein reduziertes Gewicht, veränderte Herstellungsbedingungen und unter Umständen verringerte Herstellkosten ergeben. Des Weiteren kann die Wahl eines Kunststoffes vorteilhaft sein hinsichtlich der Gestaltung der Gleitbedingungen, eines Temperaturgangs und/oder hinsichtlich der Beständigkeit des Ventils bzgl. Bestandteilen des das Ventil durchströmenden Fluids.

Die Ausbildung der Abstandselemente ist beliebig. Gemäß einer exemplarisch genannten Ausführungsform kann das Abstandselement durch mehrere in Umfangsrichtung um den Ventilschieber verteilte Stangen gebildet sein. Für eine bevorzugte Ausgestaltung der Erfindung ist allerdings das Abstandselement hülsenförmig oder käfigartig ausgebildet, wobei an den beiden Stirnseiten der Hülse eine Steuerkanteneinheit oder ein Einstell- oder Schraubelement abgestützt sein kann. Die Hülse kann radiale Ausnehmungen bilden, mit welchen ein Teil einer Ventilkammer gebildet ist bzw. ein Übertritt des Fluids von einem Anschluss des Ventils zu einer Ventilkammer gewährleistet ist. Das Abstandselement kann stirnseitig auch die Stützringscheiben oder Anlageflächen für die Dichtringe ausbilden, so dass die Abstandselemente integraler Bestandteil der Steuerkanteneinheiten sein können.

Wie eingangs erwähnt, kann das Ventil beliebig ausgebildet sein. In bevorzugter Ausgestaltung handelt es sich bei dem Ventil um ein 2/2-Wegeventil oder ein 3/2-Wegeventil.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden sein kann, ohne dass es einer expliziten Verwendung des Adverbs "mindestens" bedarf. Wenn also beispielsweise von einem Abstandselement oder einer Steuerkanteneinheit die Rede ist, ist dies so zu verstehen, dass genau ein Abstandselement oder eine Steuerkanteneinheit, zwei Abstandselemente oder Steuerkanteneinheiten oder mehr Abstandselemente oder Steuerkanteneinheiten vorhanden sein können.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch ein pneumatisches Ventil in Schieberbauart in einem Teillängsschnitt.
- **Fig. 2**: zeigt das Ventil gemäß Fig. 1 mit der Wechselwirkung zwischen einem Gehäuse, einem Sicherungsring und einem Schraubelement in vereinfachter Darstellung bei Blickrichtung in Richtung der Längsachse.
- **Fig. 3**: zeigt das Ventil gemäß Fig. 1 und 2 in alternativer Ausgestaltung mit der Wechselwirkung zwischen einem Gehäuse, einem Sicherungsring und einem Schraubelement in vereinfachter Darstellung bei Blickrichtung in Richtung der Längsachse.
- **Fig. 4**: zeigt schematisch eine Ausgestaltung eines erfindungsgemäßen Ventils als 3/2-Wegeventil in einem Längsschnitt, wobei sich das Ventil in einer Entlüftungsstellung befindet.
- **Fig. 5**: zeigt das Ventil gemäß Fig. 4 in einer Belüftungsstellung.
- **Fig. 6**: zeigt ein weiteres erfindungsgemäßes Ventil in Ausgestaltung als 2/2-Wegeventil in einem Längsschnitt, wobei sich das Ventil in einer Sperrstellung befindet.
- **Fig. 7**: zeigt das Ventil gemäß Fig. 6 in einer Durchlassstellung.
- **Fig. 8**: zeigt eine alternative Ausgestaltung eines pneumatischen Ventils mit einem über ein Sicherungselement in unterschiedlichen axialen Positionen sicherbaren Einstellelement in einem Längsschnitt.
- **Fig. 9**: zeigt eine weitere alternative Ausgestaltung eines pneumatischen Ventils mit einem über ein Sicherungselement in unterschiedlichen axialen Positionen sicherbaren Einstellelement in einem Längsschnitt.

### FIGURENBESCHREIBUNG

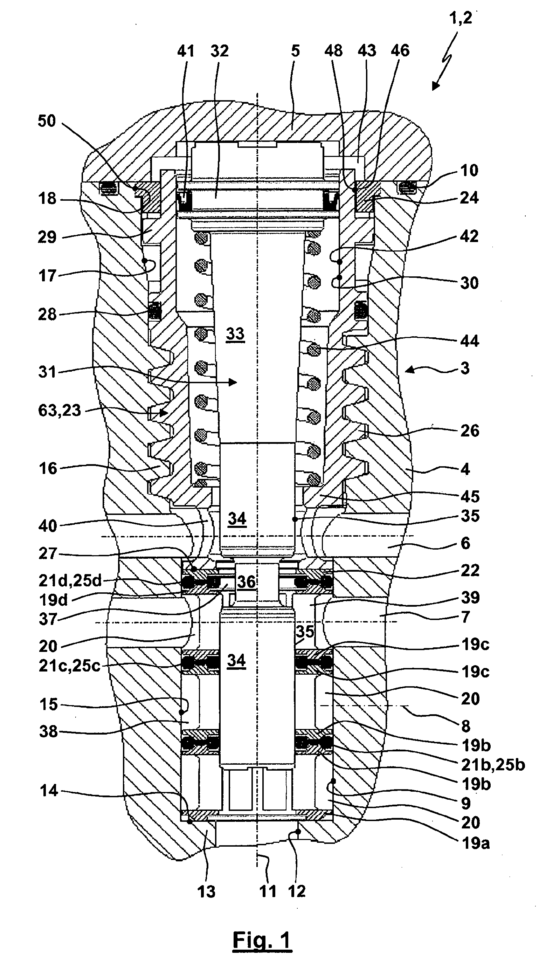

**Fig. 1** zeigt ein Ventil 1, welches als pneumatisch gesteuertes 3/2-Wegeventil 2 ausgebildet ist. Das Ventil verfügt über ein Gehäuse 3, welches einen Grundkörper 4 sowie einen Deckel 5 besitzt. Der Grundkörper 4 verfügt über Anschlüsse 6, 7 sowie einen Anschluss 8, welcher nicht in der Zeichenebene liegt, aber mit der strichpunktierten Linie in Fig. 1 hinsichtlich seiner axialen Position angedeutet ist.

Der Grundkörper 4 verfügt über eine hier durchgehende Ausnehmung 9 mit veränderlichem Querschnitt. Die Ausnehmung 9 ist nach oben durch den Deckel 5 verschlossen, wobei zwischen Deckel 5 und Grundkörper 4 ein Dichtelement 10 in Form eines in eine Ringnut des Grundkörpers 4 eingesetzten O-Rings zwecks Abdichtung zwischengeordnet und axial verpresst ist.

Die Ausnehmung 9 besitzt eine Längsachse 11. In Richtung der Längsachse 11 geht die Ausnehmung 9 von einer Entlüftungsbohrung 12 über einen von einem Absatz 13 gebildeten Boden 14 über in einen Bereich mit einer zylindrischen Innenfläche 15, ein Innengewinde 16, einen Dicht- und Führungsbereich 17 sowie einen Sicherungsbereich mit einer Innenfläche 18. In die Ausnehmung 9 sind in der folgenden Reihenfolge folgende Bauelemente bei Anordnung koaxial zur Längsachse 11 eingebracht: Eine Stützringscheibe 19a, ein Abstandselement 20, eine erste Stützringscheibe 19b, ein Dichtelement 21 b, eine zweite Stützringscheibe 19b, ein Abstandselement 20, eine erste Stützringscheibe 19c, ein Dichtelement 21 c, eine zweite Stützringscheibe 19c, ein Abstandselement 20, eine erste Stützringscheibe 19d, ein Dichtelement 21d, ein Gleitring 22, ein Schraubelement 23 und ein Sicherungselement 24. Mit den Dichtelementen 21b, 21c, 21d sind Steuerkanteneinheiten 25b, 25c, 25d gebildet. Möglich ist aber auch, dass die Steuerkanteneinheiten 25 ausschließlich aus dem Dichtelement 21 b, 21 c, 21 d bestehen, wobei auch ein Paar von Stützringscheiben 19a, 19b bzw. 19b, 19c bzw. 19c, 19d integraler Bestandteil eines Abstandselements 20 sein kann. In alternativer Ausgestaltung sind die Steuerkanteneinheiten 25b, 25c, 25d jeweils mit einem Dichtelement 21b, 21c, 21d sowie einer benachbarten ersten und zweiten Stützringscheibe 19b bzw. 19c bzw. 19d gebildet, die dann unabhängig von den Abstandselementen 20 ausgebildet sind. Die Abstandselemente 20 sowie die Stützringscheiben 19 können mit einer Übergangspassung in die Innenfläche 15 eingesetzt sein oder unter Ausbildung eines radialen Spiels.

Das Schraubelement 23 besitzt ein Außengewinde 26, mit welchem das Schraubelement 23 in das Innengewinde 16 eingeschraubt ist, bis eine Stirnseite 27 des Schraubelements 23 an den Gleitring 22 zur Anlage kommt. Mit weiterer Verschraubung des Schraubelements 23 erfolgt mit Erhöhung des Einschraubwinkels je nach aufgebrachtem Einschraubmoment ein axiales Verspannen der Dichtelemente 21 b, 21 c, 21 d zwischen den Stützringscheiben 19. Die Dichtelemente 21 sind unter radialer Abdichtung außenliegend an die Innenfläche 15 des Grundkörpers 4 angepresst, was allein durch ein Übermaß des Durchmessers des Dichtelements 21 und/oder zumindest teilweise durch die erwähnte axiale Vorspannung bedingt sein kann. Im Bereich der Dicht- und Führungsfläche 17 liegt ein Dichtelement 28 in Ausbildung als O-Ring, welcher in einer Ringnut des Schraubelements 23 aufgenommen ist, unter Abdichtung an der Dicht- und Führungsfläche an. Des Weiteren kann eine ergänzende Führung des Schraubelements 23 durch einen Bund 29 des Schraubelements an der Dicht- und Führungsfläche 17 erfolgen.

Das Schraubelement 23 besitzt eine abgestufte Durchgangsbohrung 30, durch welche sich ein Ventilschieber 31 erstreckt. Der Ventilschieber 31 verfügt über einen Steuerkolben 32, einen unter Umständen kegelförmigen Übergangsbereich 33 und einen Steuerbereich 34, der eine zylindrische Mantelfläche 35 besitzt mit darin angeordneter Ringnut 36. In der in Fig. 1 wirksamen Schaltstellung bildet die Ringnut 36 einen Bypass 37, mit welchem eine Umgehung der von dem Dichtelement 21 d gebildeten Steuerkante für die Druckluft bereitstellt ist. Hingegen liegen die Dichtelemente 21b, 21c unter Abdichtung an der zylindrischen Mantelfläche 34 an. Der Anschluss 8 mündet in eine Ventilkammer 38, welche axial durch die Dichtelemente 21 b, 21 c begrenzt ist. Der Anschuss 7 mündet in eine Ventilkammer 39, welche axial begrenzt ist durch die Dichtelemente 21 c, 21. Schließlich mündet der Anschluss 6 in eine Ventilkammer 40, welche axial begrenzt ist durch das Dichtelement 21 sowie permanent durch das Dichtelement 28 sowie den Steuerkolben 32 unabhängig von der Stellung des Ventilschiebers 31. In der in Fig. 1 wirksamen Schaltstellung ermöglicht der Bypass 37 den Übertritt von Druckluft von der Ventilkammer 39 zur Ventilkammer 40, so dass die Anschlüsse 6 und 7 pneumatisch miteinander verbunden sind, während der Übertritt von Druckluft von dem Anschluss 8 über die Ventilkammer 38 zu der Ventilkammer 39 und dem Anschluss 7 durch das Dichtelement 21 c gesperrt ist. Wird der Steuerschieber aus der in Fig. 1 wirksamen Schaltstellung nach unten verschoben, gelangt die Ringnut 36 in den axialen Bereich der Dichtung 21c, womit ein das Dichtelement 21c umgehender Bypass geschaffen ist, welcher den Anschluss 8 über die Ventilkammer 38 mit der Ventilkammer 39 und dem Anschluss 7 verbindet. In dieser Schaltstellung kommt das Dichtelement 21 d zur Anlage an die Mantelfläche 35 oberhalb der Ringnut 36, womit eine Absperrung von Anschluss 6 mit Ventilkammer 40 gegenüber Anschluss 7 mit Ventilkammer 39 erfolgt.

Der Steuerkolben 32 verfügt über eine Ringnut, in welche ein Dichtelement 41 eingesetzt ist, welche bei der Axialverschiebung des Steuerkolbens 32 eine Abdichtung des Steuerkolbens 32 gegenüber der Innenfläche 42 gewährleistet. Auf der den Ventilkammern 38, 39, 40 abgewandten Seite des Steuerkolbens 32 ist eine Steuerkammer 43 gebildet, in welche ein in Fig. 1 nicht dargestellter Steueranschluss einmündet. Über eine Druckbeaufschlagung der Steuerkammer 43 kann eine Steuerkraft auf den Ventilschieber 31 ausgeübt werden, welche von der in Fig. 1 wirksamen Schaltstellung in die genannte andere Schaltstellung orientiert ist. Auf der der Steuerkammer 43 abgewandten Seite stützt sich ein Federfußpunkt einer vorgespannten Druckfeder ab, welche im Inneren des Schraubelements 23 angeordnet ist und durch welche sich der Ventilschieber 31 hindurch erstreckt. Der andere Federfußpunkt der Druckfeder 44 ist an einem radial nach innen orientierten Kragen 45 des Schraubelements 23 abgestützt, welcher in dem der Steuerkammer 43 abgewandten Endbereich des Schraubelements angeordnet ist.

Nach Montage der Stützringscheiben 19, der Abstandselemente 20, der Dichtelemente 21, des Gleitrings 22 und dem Einschrauben des Schraubelements 23 mit Dichtelement 28 wie zuvor erläutert, kann die Druckfeder 44 in das Innere des Schraubelements 23 eingebracht werden, der Ventilschieber 31 mit der Mantelfläche 34 durch die Dichtelemente 21 b, 21 c, 21 d hindurchgefädelt werden mit gleichzeitiger Vorspannung der Druckfeder 44 und abdichtendem Eintritt des Steuerkolbens 32 in die zylindrische Innenfläche 42. Hieran anschließend kann die Montage des Deckels 5 mit dem Grundkörper 4 erfolgen. In der in Fig. 1 wirksamen Schaltstellung stützt sich der Ventilschieber 31 infolge der Vorspannung der Druckfeder 44 ohne anliegenden Steuerdruck in der Steuerkammer 43 an dem Deckel 5 ab, während mit Druckbeaufschlagung der Steuerkammer 43 der Ventilschieber 31 wie erläutert nach unten und von dem Deckel 5 weg bewegt wird.

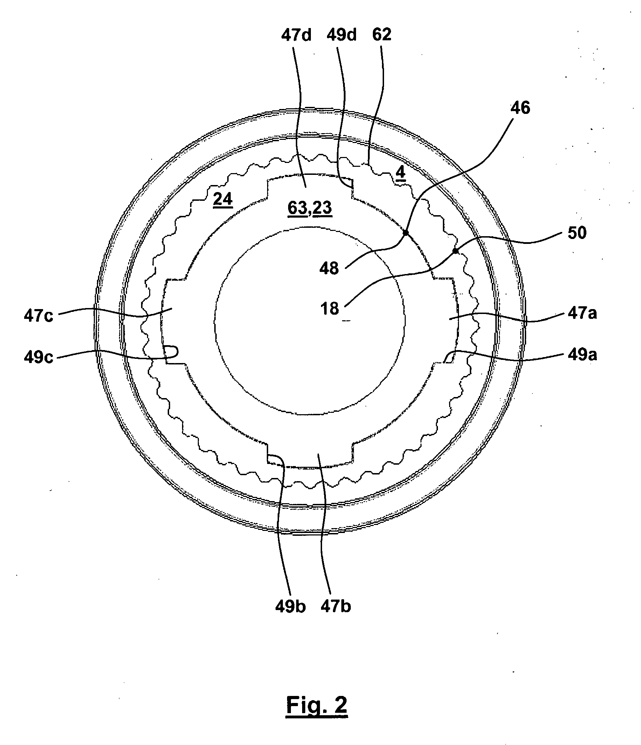

Erfindungsgemäß ist ein Sicherungselement 24 vorgesehen, welches zwischen Schraubelement 23 und Grundkörper 4 des Gehäuses 3 wirkt. Wie in **Fig. 2** zu erkennen ist, besitzt das Schraubelement 23 in dem der Steuerkammer 43 zugewandten Endbereich eine unrunde Mantelfläche 46, welche mit vier gleichmäßig über den Umfang verteilten radialen Fortsätzen 47 gebildet ist. Das Sicherungselement 24 besitzt eine unrunde Innenfläche 48, welche korrespondierend zur Außenfläche 46 des Schraubelements 23 ausgebildet ist mit Ausnehmungen 49. Somit kann der Sicherungsring 24 formschlüssig in axialer Richtung auf das Schraubelement aufgeschoben werden mit einem kleinem oder keinem Spiel, wobei die Fortsätze 47 in die Ausnehmungen 49 eintreten. Möglich ist eine Montage des Sicherungselements 24 für vier unterschiedlichem Einschraubwinkeln für einen Gewindegang.

Das Sicherungselement 24 verfügt über eine unrunde Außenfläche 50, welche formschlüssig und passgenau eingreift in eine unrunde Innenfläche 18 des Grundkörpers 4 des Gehäuses 3. Für das in Fig. 2 dargestellte Ausführungsbeispiel sind die Außenfläche 50 und die Innenfläche 18 als ineinander greifende Verzahnungen 62 ausgebildet. Ein axiales Einsetzen des Sicherungselements 24 in den Grundkörper 4 ist bei Verdrehung des Schraubelements 23 um 360° in einer Zahl unterschiedlicher Einschraubwinkel möglich, welche der Zahl der Zähne der Verzahnung 62 entspricht. Somit kann eine Sicherung des Schraubwinkels in Stufen erfolgen, welche einer Änderung des Einschraubwinkels entsprechend der Zahnbreite entsprechen. Eine Veränderung der Verschraubung des Schraubelements 23 mit dem Grundkörper 4 kann lediglich erfolgen, wenn das Sicherungselement 24 axial demontiert wird. Ein unbeabsichtigtes axiales Heraustreten des Sicherungselements 24 ist vermieden dadurch, dass die axiale Position des Sicherungselements 24 durch den an diesem anliegenden Deckel gesichert ist.

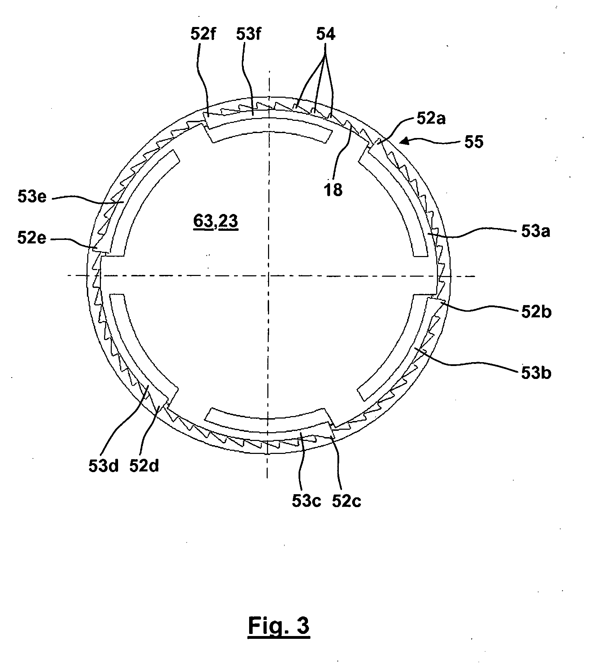

Eine alternative Ausgestaltung für eine Sicherung des Einschraubwinkels des Schraubelements 23 ist in **Fig. 3** dargestellt, wobei hier zur Vereinfachung das Schraubelement 23 ohne die Durchgangsbohrung 30 dargestellt ist. Das Schraubelement 23 verfügt über Rastnasen 52, welche über Federarme 53 an einem Grundkörper des Schraubelements 23 gehalten sind, wobei Rastnase 52 und Federarme 53 für das dargstellte Ausführungsbeispiel als integrale Bestandteile des Schraubelements 23 ausgebildet sind. Hier besitzt der Grundkörper 4 des Gehäuses 3 eine unrunde Innenfläche 18, die mit einer Vielzahl von in Umfangsrichtung gleichmäßig verteilten Rastvertiefungen 54 ausgebildet ist. Die Rastnasen 52 sind unter elastischer Vorspannung der Federarme 53 radial nach außen beaufschlagt, so dass diese in definierten Winkellagen eintreten können in die Rastvertiefungen 54. Über die Formgebung der Rastnasen 52 sowie der Rastvertiefungen 54 kann ein Rast- oder Verriegelungsverhalten der derart gebildeten Sicherungseinheit vorgegeben werden. Besitzen hier die Rastvertiefung 54 sowie die Rastnase 52 eine in radialer Richtung orientierte Anlagefläche, wie dies gemäß Fig. 3 der Fall ist für die Sicherung der Verdrehung des Schraubelements 23 entgegen des Uhrzeigersinns, kann ein Auflösen der Wechselwirkung zwischen Rastnase 52 und Rastvertiefung 54 nicht durch alleinige Aufbringung von Schraubmomenten auf das Schraubelement 23 herbeigeführt werden. Vielmehr kann die Wechselwirkung nur durch Zerstörung der Rastnase 52 und/oder Rastvertiefung 54 aufgelöst werden oder durch Verbiegen der Federarme 53 mittels eines zusätzlichen Werkzeugs radial nach innen. Sind hingegen die Anlageflächen zwischen Rastnase 52 und Rastvertiefung 54 gegenüber der radialen Orientierung geneigt, wie dies in Fig. 3 der Fall ist für die Anlageflächen, die mit Verdrehung des Schraubelements 23 im Uhrzeigersinn zur Wirkung kommen, führt die Aufbringung eines entsprechenden Schraubmoments dazu, dass in der Kontaktfläche eine Kraftkomponente erzeugt wird, welche die Federarme 53 radial nach innen beaufschlagt. Für ein hinreichendes Schraubmoment, welches von dem Neigungswinkel der Kontaktfläche und der Steifigkeit der Federarme 53 abhängig und damit konstruktiv vorgebbar ist, kann die Verbindung zwischen der Rastnase 52 und einer spezifischen Rastvertiefung 54 aufgehoben werden, das Schraubelement 23 im Uhrzeigersinn gedreht werden und die Rastnase 52 in eine im Uhrzeigersinn benachbarte Rastvertiefung 54 einrastet. Somit ist gemäß Fig. 3 eine Ratscheneinrichtung 55 gebildet, bei welcher ein ratschenartiges Einschrauben des Schraubelements 23 möglich ist und ein einmal erreichter Einschraubwinkel gegen ein Lösen gesichert ist.

Für die Beschreibung der weiteren Ausführungsbeispiele der Erfindung sind für hinsichtlich des konstruktiven Aufbaus und/oder der Funktion teilweise übereinstimmende Bauelemente dieselben Bezugszeichen verwendet wie für die Ausführungsbeispiele gemäß Fig. 1 bis 3.

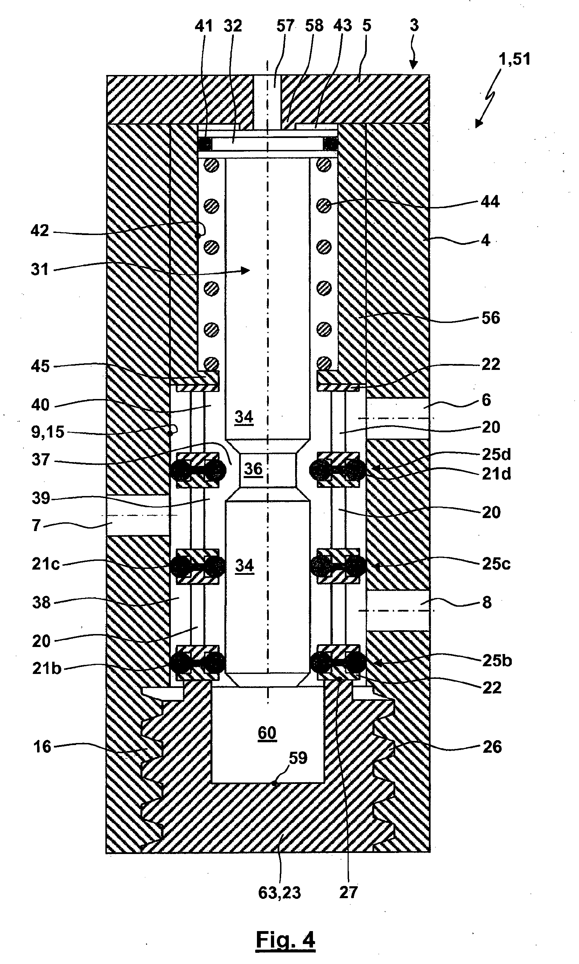

Gemäß dem in **Fig. 4** dargestellten Ausführungsbeispiel, hier ein 3/2-Wegeventil 51, besitzt der Grundkörper 4 eine Ausnehmung 9, welche im Wesentlichen mit einer zylindrischen Innenfläche 15 sowie einem Innengewinde 16 gebildet ist. Allerdings befindet sich hier das Innengewinde 16 nicht in dem der Steuerkammer 43 zugewandten Endbereich des Grundkörpers 4, sondern in dem gegenüberliegenden Endbereich. In diesem Fall dient das in das Innengewinde 16 eingeschraubte Schraubelement 23 lediglich des Verschlusses der Ausnehmung 9 sowie der Einstellung der axialen Positionen und der Vorspannung der Steuerkanteneinheiten 25b, 25c, 25d. An der Stirnseite 27 des Schraubelements 23 stützt sich in der folgenden Reihenfolge die Steuerkanteneinheit 25b, ein Abstandselement 20, die Steuerkanteneinheit 25c, ein Abstandselement 20, die Steuerkanteneinheit 25d, ein Abstandselement 20 und, ggf. unter Zwischenschaltung einer weiteren Stützringscheibe 19 oder eines Gleitrings 22, eine Abstandshülse 56 ab, deren dem Schraubelement 23 abgewandte Stirnseite an dem Deckel 5 anliegt. Mit Verschraubung des Schraubelements 23 in dem Gewinde 13 werden somit die Dichtelemente 21b, 21c, 21 d zwischen Schraubelement 23 und Deckel 5 bzw. Abstandshülse 56 verspannt. Die Abstandshülse 56 bildet hier die Innenfläche 42 aus, gegenüber welcher unter Abdichtung mittels des Dichtelements 41 der Steuerkolben 32 geführt ist. Die mit einem Federfußpunkt an dem Steuerkolben 32 abgestützte vorgespannte Druckfeder 44 stützt sich mit dem anderen Fußpunkt an einem Kragen 45 der Abstandshülse 56 ab. In Fig. 4 ist auch der in die Steuerkammer 43 mündende Steueranschluss 57 zu erkennen, welcher im Bereich eines Fortsatzes 58 in die Steuerkammer 43 mündet. In der in Fig. 4 wirksamen Schaltstellung liegt der Steuerkolben infolge der Vorspannung durch die Druckfeder 44 und der nicht druckbeaufschlagten Steuerkammer 43 an der Stirnseite des Fortsatzes 58 an. In dieser Schaltstellung ist über den Bypass 37 der Anschluss 6 mit dem Anschluss 7 verbunden, während über das Dichtelement 21c die Verbindung der Anschlüsse 7, 8 abgesperrt ist.

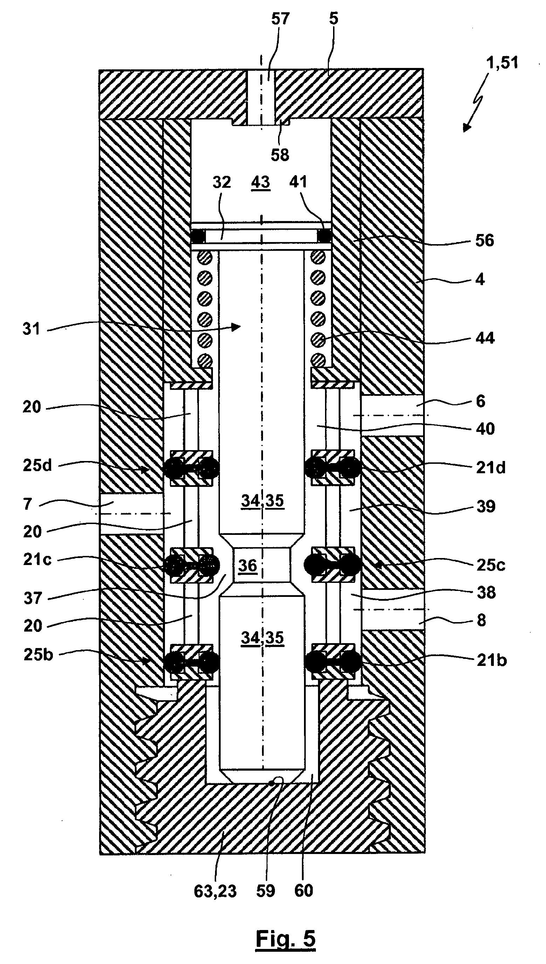

Erfolgt eine Druckbeaufschlagung der Steuerkammer 43, wird der Ventilschieber 31 nach unten geschoben in die Stellung gemäß **Fig. 5**, in welcher die Ringnut 36 dann den Bypass 37 zur Umgehung des Dichtelements 21c bildet. In der Schaltstellung gemäß Fig. 5 liegt die dem Steuerkolben 32 abgewandte Stirnseite des Ventilschiebers 31 an einer Anlagefläche 59 des Schraubelements 23 an. Zur Ermöglichung einer kompakten Bauweise kann hierzu der Ventilschieber 31 mit der genannten Stirnseite in eine Sacklochausnehmung 60 des Schraubelements 23 eintreten.

Auf dem Weg des Ventils 1 von der Schaltstellung gemäß Fig. 4 zu der Schaltstellung gemäß Fig. 5 ist in einer mittigen Schaltstellung die Ringnut derart in der Ventilkammer 39 angeordnet, dass diese keinen Bypass 37 bildet, sondern beidseits in axialer Richtung durch die Dichtelemente 21c, 21 d abgesperrt ist. Somit verfügt das Schaltventil gemäß Fig. 4 und 5 über eine mittige Sperrstellung, in welcher sämtliche Anschlüsse 6, 7, 8 abgesperrt sind. Diese Schaltstellung ist aber für eine hinreichende Druckbeaufschlagung der Steuerkammer 43 für das Ausführungsbeispiel gemäß Fig. 4 ohne weitere Bedeutung.

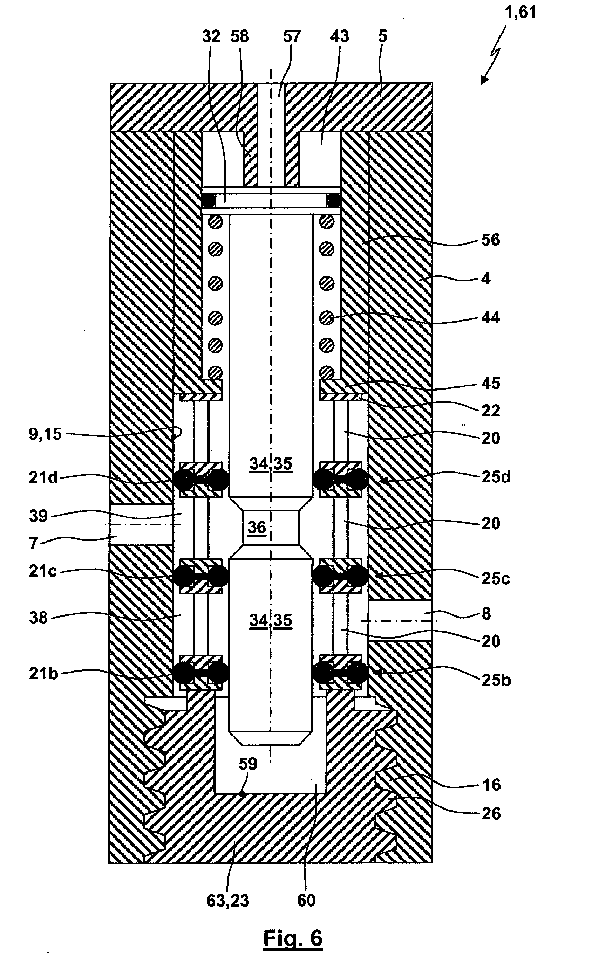

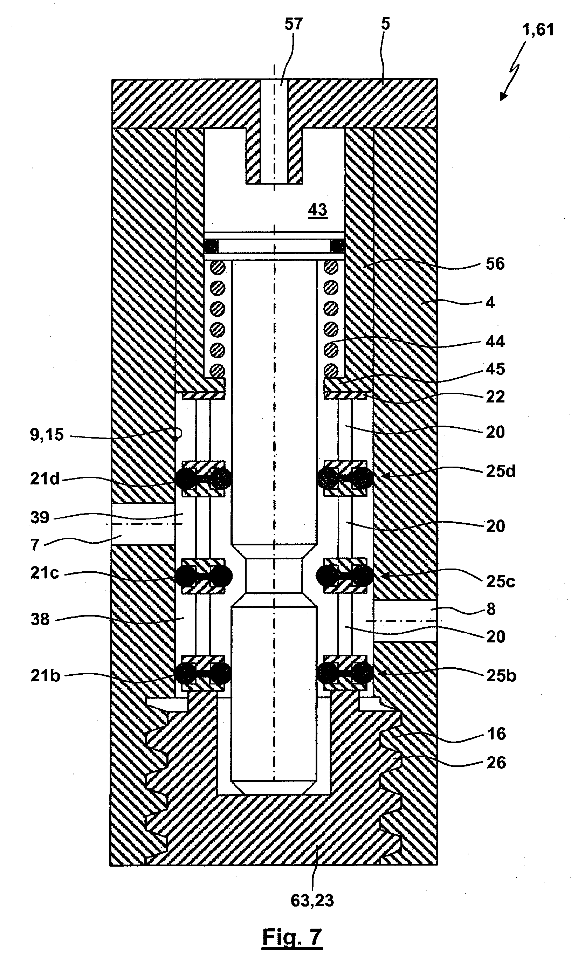

**Fig. 6** **und** **7** zeigen ein geringfügig gegenüber dem Ausführungsbeispiel gemäß Fig. 4 und 5 modifiziertes Ventil 1, welches lediglich über die Anschlüsse 7 und 8, nicht jedoch über den Anschluss 6 verfügt. Hier bildet das Ventil 1 ein 2/2-Wegeventil 61, welches lediglich über eine Sperrstellung, in welcher die Anschlüsse 7, 8 gegeneinander abgesperrt sind, sowie eine Durchlassstellung, in welcher die Anschlüsse 7, 8 miteinander verbunden sind, verfügt. Als Sperrstellung wird die zuvor hinsichtlich der Fig. 4 und 5 erläuterte "mittige" Schaltstellung verwendet. Damit diese ohne Druckbeaufschlagung der Steuerkammer 43 gemäß Fig. 6 eingenommen wird, ist der Fortsatz 58 gemäß diesem Ausführungsbeispiel mit vergrößerter Längserstreckung ausgebildet, wobei der Unterschied der Längserstreckungen der Fortsätze 58 für das Ausführungsbeispiel gemäß Fig. 4 und 5 einerseits und das Ausführungsbeispiel gemäß Fig. 6 und 7 andererseits dem halben Weg zwischen den Schaltstellungen gemäß Fig. 4 und 5 entspricht. Beispielsweise kann für die Ausbildung eines 2/2-Wegeventils 61 gemäß Fig. 6 und 7 in Abwandlung zu dem 3/2-Wegeventil 51 gemäß Fig. 4 und 5 lediglich ein Austausch des Deckels 5 mit einem Fortsatz 58 mit veränderter Erstreckung erfolgen mit Entfall des Anschlusses 6 in dem Grundkörper 4 oder Verschluss eines etwaig vorhandenen Anschlusses 6 durch einen Blindstopfen. Somit kann mit einem hohen Anteil von Gleichteilen die Ausbildung einerseits eines 2/2-Wegeventils und andererseits eines 3/2-Wegeventils erfolgen.

Für die Steuerkanteneinheiten 25, die Stützringscheiben 19, die Dichtelemente 21 und die Abstandselemente 20 können in ein- und derselben Ausführungsform oder auch in den unterschiedlich dargestellten Ausführungsformen dieselben Bauelement Einsatz finden, so dass diese Elemente mit einer hohen Stückzahl zu geringen Kosten gefertigt werden können. Wie in den Figuren ersichtlich ist, besitzen die Dichtelemente 21 einen in erster Näherung hantelförmigen Halblängsschnitt, wobei der radial außenliegende Bestandteil des Dichtelements 21 in der Art eines O-Rings ausgebildet ist ebenso wie der radial innenliegende Bestandteil, wobei die genannten Bestandteile über einen radial orientierten Steg miteinander verbunden sind. Auch die Anpressung des Dichtelements 21, insbesondere des innenliegenden Bestandteils, an die Mantelfläche 34 des Ventilschiebers 31 kann durch ein konstruktiv vorgegebenes Untermaß des inneren Durchmessers des Dichtelements 21 oder zumindest teilweise durch die axiale Vorspannung des Dichtelements 21 hervorgerufen sein.

Vorzugsweise sind das Innengewinde 16 des Grundkörpers 4 und das Außengewinde 26 des Schraubelements 23 als Trapezgewinde ausgebildet. Von Vorteil ist, wenn für benachbarte Bauelemente derselbe Werkstoff, insbesondere derselbe Kunststoff-Werkstoff eingesetzt ist, so dass keine Toleranzverschiebungen infolge unterschiedlicher Wärmedehnungen entstehen können.

Die Abstandselemente 20 können in Form von Hülsen ausgebildet sein, welche radiale Durchgangsbohrungen oder anderweitige Ausnehmungen besitzen, um eine Durchströmung der Abstandselemente 20 zu ermöglichen. Ebenfalls möglich ist, dass die Abstandselemente 20 "käfigartig" ausgebildet sind.

Durchaus möglich ist, dass abweichend zu den dargestellten Ausführungsbeispielen der Federfußpunkt der Druckfeder 44 nicht an dem Steuerkolben abgestützt ist, sondern an der Stirnseite des Ventilschiebers 31, welche an dem dem Steuerkolben 32 gegenüberliegenden Endbereich angeordnet ist. So kann beispielsweise gemäß Fig. 5 die Druckfeder 44 abweichend zwischen der unteren Stirnseite des Ventilschiebers 31 und der Anlagefläche 59 abgestützt sein. Dies hat allerdings zur Folge, dass die Kräfte der Druckfeder 44 einerseits und des Steuerdrucks andererseits mit einem großen Abstand auf den Ventilschieber 31 einwirken. In der Druckfeder 44 können auch Querkraftkomponenten entstehen und/oder die mittels Druckfeder 44 und Steuerkolben 32 aufgebrachten Axialkräfte fluchten nicht vollständig miteinander, so dass ein Kräftepaar und ein Moment auf den Ventilschieber 31 wirken, wobei das Moment um eine vertikal zu den Zeichenebenen gemäß Fig. 1 und 4 bis 7 orientierte Achse wirkt. Dieses Moment muss über die Dichtelemente 21, 41 abgestützt werden, was zu mechanischen Beeinträchtigungen der Dichtelemente 21, 41 und Undichtigkeiten führen kann. Hingegen führt die erfindungsgemäße Ausgestaltung gemäß Fig. 1 und 4 bis 7 zu einer Kräfteeinleitung sowohl des Steuerdrucks als auch der Druckfeder 44 mit einem geringen axialen Abstand in den Ventilschieber 31, wodurch ein Moment der zuvor erläuterten Art zumindest reduziert ist und die Beanspruchungen der Dichtelemente 21, 41 vermindert werden kann.

Hinsichtlich weiterer möglicher Ausgestaltungen des Ventils 1, möglicher Anwendungszwecke eines derartigen Ventils im Rahmen der vorliegenden Erfindung wird auf die Patentanmeldung DE 10 2009 045 734 A1 der Anmelderin verwiesen.

In den Fig. 1 bis 7 ist ein Einstellelement 63 zur Einstellung der axialen Position der Steuerkanteneinheiten 25, der Abstandselement 20 und/oder für die Vorspannung der Dichtelemente 21 der Steuerkanteneinheiten 25 von dem Schraubelement 23 gebildet, wobei sich bei dem momentgesteuertem Einschrauben des Schraubelements 23 je nach den vorherrschenden Toleranzen die Stirnseite 27 an unterschiedlichen axialen Positionen befindet.

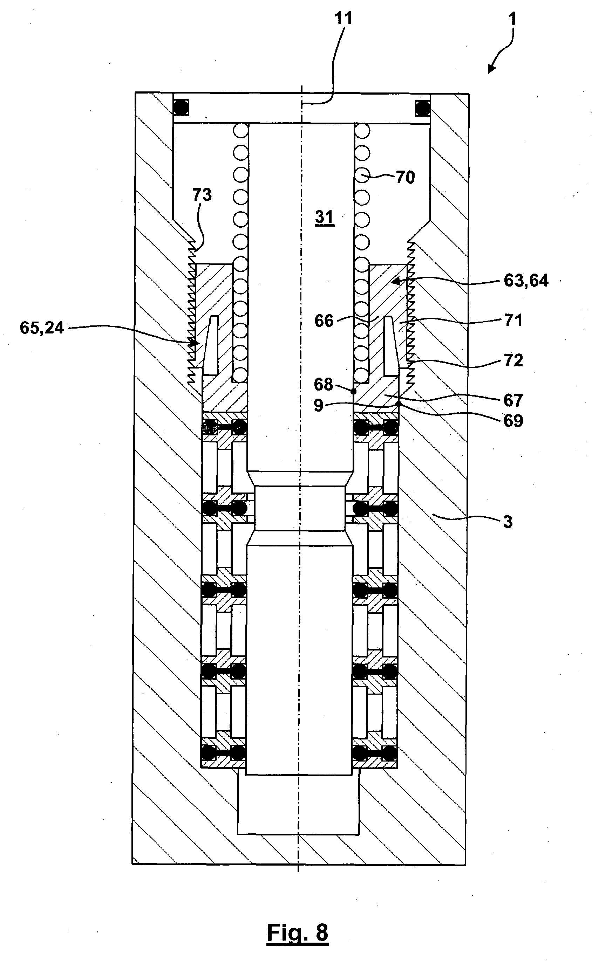

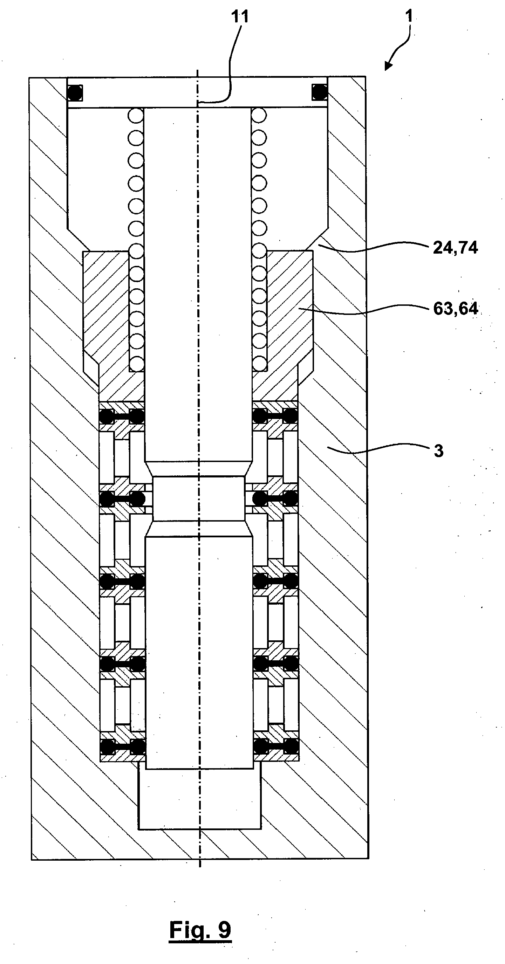

Die **Fig. 8** **und** **9** zeigen eine anderweitige, aber dennoch von der vorliegenden Erfindung umfasste Ausgestaltung des Einstellelements 63: Hier findet ein Einpresselement 64 Einsatz, welches nicht in das Gehäuse 3 des Ventils 1 eingeschraubt wird, sondern axial in Richtung der Längsachse 11 in die Ausnehmung 9 des Gehäuses 3 eingepresst wird. Eine axiale Sicherung des Einpresselements 64 erfolgt hier über ein Sicherungselement 24, welches als Rasteinrichtung 65 ausgebildet ist. Ohne dass dies zwingend der Fall ist, ist für das in Fig. 8 dargestellte Ausführungsbeispiel die Rasteinrichtung 65 als integraler Bestandteil des Einpresselements 64 ausgebildet. Das Einpresselement 64 besitzt einen Grundkörper 66, welcher in erster Näherung hülsenförmig ausgebildet ist. In dem den Steuerkanteneinheiten 25 zugewandten Endbereich bildet der Grundkörper 66 einen Ringkörper 67 aus, dessen zylindrische Innenfläche 68 mit einem eine Relativbewegung ermöglichenden Spiel zu der Mantelfläche des Ventilschiebers 31 angeordnet ist, während die außenliegende Zylinderfläche 69 mit Spiel oder mit einer Übergangspassung gegenüber der Ausnehmung 9 angeordnet oder geführt ist. Möglich ist, dass (wie dargestellt) rückseitig an dem Ringkörper 67 eine das Einpresselement 64 in Richtung der Steuerkanteneinheiten 25 beaufschlagende Druckfeder 70 abgestützt ist. Auf der dem Ringkörper 67 abgewandten Seite kragt von dem Grundkörper 66 radial nach außen mindestens ein Rastarm 71 aus, welcher in seinem Endbereich eine Rastnase 72 trägt oder ausbildet. Die Rastnase 72 greift ein in Rastvertiefungen 73 des Gehäuses, wobei die Rastnasen 72 elastisch durch den Rastarm 71 in die Rastvertiefungen 73 eingepresst werden. Durch die Geometrie der Rastnasen 72 und Rastvertiefungen 73 kann das Kraftniveau der Einpresskraft vorgegeben werden, welches auf das Einpresselement 64 aufgebracht werden muss, damit die Rastnase 72 von einer axial weiter außen gelegenden Rastvertiefungen 73 unter elastischer Verformung des Rastarms 71 zu einer axial weiter innen gelegenden Rastvertiefung 73 gelangen kann. Die Geometrie der Rastnasen 72 und Rastvertiefungen 73 gibt des Weiteren eine Stufung vor, mit welchem Abstand axiale Positionen der Rasteinrichtung 65 eingenommen und gesichert werden können. Für diese Ausgestaltung ist mit der Rasteinrichtung 65, insbesondere dem Rastarm 71, der Rastnase 72 und den Rastvertiefungen 73, ein Sicherungselement 24 gebildet. Für die in Fig. 8 dargestellte Geometrie der Rastnasen 72 und Rastvertiefungen 73 kann ein Einpressen des Einpresselements 64 durch "überdrücken" erfolgen. Hingegen sind die rückwärtigen Flanken der Rastnasen 72 und der Rastvertiefungen 73 quer zur Längsachse 11 orientiert, sodass auch bei großen, nach außen wirkenden Axialkräften das Einpresselement 64 die eingenommene und gesicherte axiale Position nicht verlassen kann. Ist eine Demontage des Einpresselements 64 gewünscht, kann dies nur unter Zerstörung der Rasteinrichtung 65 erfolgen oder es müssen zusätzliche Maßnahmen getroffen werden, damit beispielsweise durch ein Werkzeug der Rastarm 71 radial nach innen verformt werden kann, sodass die Rastnase 72 aus der zugeordneten Rastvertiefung 73 austreten kann. Es sind aber auch beliebige andere Geometrien der Rastnasen 72 und Rastvertiefungen 73 möglich.

Wie in Fig. 8 dargestellt können über den Umfang verteilt mehrere Rastarme 71 mit Rastnasen 72 vorhanden sein, wobei auch eine integrale, umlaufende Ausbildung von Rastarm 71 und Rastnase 72 möglich ist. Für die Montage wird eine empirisch oder analytisch vorbestimmte Einpresskraft auf das Einpresselement 63 aufgebracht, für die dann eine Axialposition eingenommen wird, in welcher die Dichtelemente 21 der Steuerkanteneinheiten 25 mit einer definierten Vorspannkraft beaufschlagt sind, was unabhängig von Toleranzen bei der Herstellung der beteiligten Bauelemente zuverlässig gewährleistet werden kann.

Fig. 9 zeigt eine alternative Ausgestaltung für ein als Einpresselement 64 ausgebildetes Einstellelement 63, welches koaxial zur Längsachse 11 in das Gehäuse 3 eingepresst wird. In diesem Fall ist das Sicherungselement 24 als Verstemmung des Gehäuses 3 ausgebildet, womit ein plastisch verformter Wulst 74 das Einpresselement 64 an einer Bewegung von einer axial gesicherten Position weg hindert.

Die in den Fig. dargestellten Ausführungsbeispiele sollen lediglich exemplarisch mögliche Ausgestaltungen des Einstellelements 63 und des Sicherungselements 24 im Rahmen der vorliegenden Erfindung bilden, ohne dass die Erfindung auf diese Ausführungsbeispiele beschränkt ist. Um lediglich ein weiteres Beispiel zu nennen, kann ein Einstellelement 63 auch axial in die Ausnehmung 9 des Gehäuses 3 eingesetzt werden, während eine Sicherungswirkung durch Verdrehung des Einstellelements 63 in unterschiedlichen axialen Positionen erfolgen kann, beispielsweise durch eine Art Bajonett-Verbindung. Beispielsweise kann das Einstellelement 63 über radial orientierte Stifte verfügen, welche für die axiale Bewegung des Einstellelements 63 in Längsnuten der Ausnehmung verschieblich sind. Mit der Verdrehung des Einstellelements 63 zur Herbeiführung der Sicherungswirkung treten diese radial orientierten Stifte ein in Umfangsnuten des Gehäuses 3, womit dann eine axiale Sicherung gewährleistet ist (eine Umkehrung dieses Prinzips mit Stiften in dem Gehäuse und Nuten in dem Einstellelement ist ebenfalls möglich)

### BEZUGSZEICHENLISTE

- 1: Ventil
- 2: 3/2-Wegeventil
- 3: Gehäuse
- 4: Grundkörper
- 5: Deckel
- 6: Anschluss
- 7: Anschluss
- 8: Anschluss
- 9: Ausnehmung
- 10: Dichtelement
- 11: Längsachse
- 12: Entlüftungsbohrung
- 13: Absatz
- 14: Boden
- 15: Innenfläche
- 16: Innengewinde
- 17: Dicht- und Führungsfläche
- 18: Innenfläche
- 19: Stützringscheibe
- 20: Abstandselement
- 21: Dichtelement
- 22: Gleitring
- 23: Schraubelement
- 24: Sicherungselement
- 25: Steuerkanteneinheit
- 26: Außengewinde
- 27: Stirnseite
- 28: Dichtelement
- 29: Bund
- 30: Durchgangsbohrung
- 31: Ventilschieber
- 32: Steuerkolben
33 Übergangsbereich
34 Steuerbereich
35 Mantelfläche
36 Ringnut
37 Bypass
38 Ventilkammer
39 Ventilkammer
40 Ventilkammer
41 Dichtelement
42 Innenfläche
43 Steuerkammer
44 Druckfeder
45 Kragen
46 Mantelfläche
47 Fortsatz
48 Innenfläche
49 Ausnehmung
50 Außenfläche
51 3/2-Wegeventil
52 Rastnase
53 Federarme
54 Rastvertiefung
55 Ratscheneinrichtung
56 Abstandshülse
57 Steueranschluss
58 Fortsatz
59 Anlagefläche
60 Sacklochausnehmung
61 2/2-Wegeventil
62 Verzahnung
63 Einstellelement
64 Einpresselement
65 Rasteinrichtung
66 Grundkörper
67 Ringkörper
68 Zylinderfläche
69 Zylinderfläche
70 Druckfeder
71 Rastarm
72 Rastnase
73 Rastvertiefung
74 Wulst

## Patentansprüche

1. Pneumatisches Ventil (1) in Schieberbauart für eine Druckluftanlage eines Nutzfahrzeugs
a) mit einem in einer Ausnehmung (9) eines Gehäuses (3) in eine axiale Richtung verschieblich geführten Ventilschieber (31) und
b) mit mindestens zwei Ventilkammern (38, 39, 40),
c) wobei
ca) in einer axialen Stellung des Ventilschiebers (31) benachbarte Ventilkammern (39, 40) durch eine an einer Mantelfläche (34) des Ventilschiebers (31) dichtend anliegende Steuerkante voneinander getrennt sind,
cb) in einer anderen axialen Stellung des Ventilschiebers (31) die benachbarten Ventilkammern (39, 40) durch einen Bypass (37) miteinander verbunden sind und
cc) die Steuerkante mit einer in die Ausnehmung (9) eingesetzten Steuerkanteneinheit (25) gebildet ist, deren axiale Position mit einem Abstandselement (20) vorgegeben ist,
**dadurch gekennzeichnet, dass**
d) ein Einstellelement (63) vorhanden ist, über welches
da) die axiale Position der Steuerkanteneinheit (25), insbesondere eines die Steuerkante bildenden Dichtelements (21), und des Abstandselements (20) und/oder
db) eine Vorspannung der Steuerkanteneinheit (25), insbesondere eines die Steuerkante bildenden Dichtelements (21),
einstellbar ist/sind, und
e) ein Sicherungselement (24) vorhanden ist, über welches das Einstellelement (63) in unterschiedlichen axialen Positionen je nach eingestellter axialer Position oder Vorspannung sicherbar ist.

2. Ventil (1) nach Anspruch 1, **dadurch gekennzeichnet, dass** das Einstellelement ein axiales bewegbares Einstellelement (63), insbesondere ein Einpresselement (64), ist.

3. Ventil (1) nach Anspruch 2, **dadurch gekennzeichnet, dass** das Einstellelement (63) in unterschiedlichen axialen Positionen über eine Rast- oder Verriegelungseinrichtung (65) rastierbar ist.

4. Ventil (1) nach Anspruch 1, **dadurch gekennzeichnet, dass** das Einstellelement (63) ein Schaubelement (23) ist.

5. Ventil (1) nach Anspruch 4, **dadurch gekennzeichnet, dass** das Schraubelement (23) koaxial zu dem Ventilschieber (31) in ein Innengewinde (16) der Ausnehmung (9) des Gehäuses (3) eingeschraubt ist.

6. Ventil (1) nach Anspruch 4 oder 5, **dadurch gekennzeichnet, dass** zwischen einer Stirnseite (27) des Schraubelements (23) und einem Abstandselement (20) oder einer Steuerkanteneinheit (25) mindestens ein Gleitelement oder mindestens ein Gleitring (22) zwischengeordnet ist.

7. Ventil (1) nach einem der Ansprüche 4 bis 6, **dadurch gekennzeichnet, dass** das Schraubelement (23) ein Trapezgewinde besitzt.

8. Ventil (1) nach einem der Ansprüche 4 bis 7, **dadurch gekennzeichnet, dass** ein Einschraubwinkel des Schraubelements (23) durch ein Sicherungselement (24) gesichert ist.

9. Ventil (1) nach Anspruch 8, **dadurch gekennzeichnet, dass** das Sicherungselement (24) zur Vermeidung einer Veränderung des Einschraubwinkels formschlüssig
a) sowohl mit dem Schraubelement (23)
b) als auch mit dem Gehäuse (3)
zusammenwirkt.

10. Ventil (1) nach Anspruch 9, **dadurch gekennzeichnet, dass** das Sicherungselement (24) als Sicherungsring ausgebildet ist, dessen
a) Innenfläche (48) mit unrundem Querschnitt formschlüssig zusammenwirkt mit einer Mantelfläche (46) des Schraubelements (23) mit unrundem Querschnitt und
b) Außenfläche (50) mit unrundem Querschnitt formschlüssig zusammenwirkt mit einer Innenfläche (51) des Gehäuses (3) mit unrundem Querschnitt,
wobei
ca) das formschlüssige Zusammenwirken zwischen der Innenfläche (48) des Sicherungsrings (24) und der Mantelfläche (46) des Schraubelements (23) für unterschiedliche relative Drehwinkel zwischen Sicherungsring (24) und Schraubelement (23) und/oder
cb) das formschlüssige Zusammenwirken zwischen der Außenfläche (50) des Sicherungsrings (24) und der Innenfläche (51) des Gehäuses (3) für unterschiedliche relative Drehwinkel zwischen Sicherungsring (24) und Gehäuse (3)
möglich ist.

11. Ventil (1) nach Anspruch 10, **dadurch gekennzeichnet, dass** mindestens eine Außen- oder Mantelfläche (46, 50) oder Innenfläche (48, 51) eine Verzahnung (62) oder mindestens einen Fortsatz (47) oder Ausnehmung (49) ausbildet.

12. Ventil (1) nach einem der Ansprüche 8 bis 11, **dadurch gekennzeichnet, dass** das Sicherungselement (24) als Rast- oder Ratscheneinrichtung (55, 65) ausgebildet ist.

13. Ventil (1) nach einem der vorhergehenden Ansprüche, **dadurch gekennzeichnet, dass** die Steuerkanteneinheit (25) mit einem zwischen zwei Stützringscheiben (19) gehaltenen und/oder vorgespannten, insbesondere im Halbquerschnitt hantelförmigen, Dichtelement (21) gebildet ist.

14. Ventil (1) nach einem der vorhergegenden Ansprüche, **dadurch gekennzeichnet, dass** das Einstellelement (63) eine zylindrische Innenfläche (42) besitzt, gegenüber welcher ein den Ventilschieber (31) betätigender Steuerkolben (32) abdichtend geführt ist.

15. Ventil (1) nach einem der vorhergehenden Ansprüche, **dadurch gekennzeichnet, dass** sich eine den Ventilschieber (31) beaufschlagende Feder (44) zumindest teilweise durch das Einstellelement (63) erstreckt.

16. Ventil (1) nach einem der vorhergehenden Ansprüche, **dadurch gekennzeichnet, dass** das Gehäuse (3), der Ventilschieber (31) und/oder das Einstellelement (63) aus Kunststoff hergestellt sind.

17. Ventil (1) nach einem der vorhergehenden Ansprüche, **dadurch gekennzeichnet, dass** das Abstandselement (20) hülsenförmig ausgebildet ist mit radialen Ausnehmungen, mit welchen ein Teil einer Ventilkammer (38, 39, 40) gebildet ist.

18. Ventil (1) nach einem der vorhergehenden Ansprüche, **dadurch gekennzeichnet, dass** das Ventil als 2/2-Wegeventil (61) oder 3/2-Wegeventil (51) ausgebildet ist.

19. Ventil (1) nach einem der vorhergehenden Ansprüche, **dadurch gekennzeichnet, dass** eine den Ventilschieber beaufschlagende Feder (44) an einem den Ventilschieber (31) beaufschlagenden Steuerkolben (32) abgestützt ist.

20. Verfahren zur Montage eines Ventils (1) nach Anspruch 2 oder 3 oder einem der Ansprüche 13 bis 19 in Rückbeziehung auf Anspruch 2 oder 3, **dadurch gekennzeichnet, dass** das Einstellelement (63) mit einer definierten Einpresskraft in das Gehäuse (3) eingepresst wird, wodurch unabhängig von axialen Toleranzen eine definierte axiale Vorspannung mindestens einer oder der Steuerkanteneinheit (25), insbesondere eines die Steuerkante bildenden Dichtelements (21), erzeugt wird.

21. Verfahren zur Montage eines Ventils (1) nach einem der Ansprüche 4 bis 12 oder 13 bis 19 in Rückbeziehung auf einen der Ansprüche 4 bis 12, **dadurch gekennzeichnet, dass** das Schraubelement (23) mit einem definierten Drehmoment in das Gehäuse (3) eingeschraubt wird, wodurch unabhängig von axialen Toleranzen eine definierte axiale Vorspannung mindestens einer oder der Steuerkanteneinheit (25), insbesondere eines die Steuerkante bildenden Dichtelements (21), erzeugt wird.

## Claims

1. Pneumatical valve (1) of the sliding-valve-type for a pressurised air system of a utility vehicle
a) with a valve slider (31) which is displaceably guided in an axial direction in a recess (9) of a housing (3) and
b) with at least two valve chambers (38, 39, 40),
c) wherein
ca) in an axial position of the valve slider (31) adjacent valve chambers (39, 40) are separated from each other by a control edge sealingly contacting the outer surface (34) of the valve slider (31),
cb) in another axial position the valve slider (31) connects the adjacent valve chambers (39, 40) by a bypass (37) and
cc) the control edge is built with a control edge unit (25) inserted into the recess (9), wherein the axial position of the control edge unit (25) is defined by a distance element (20),
**characterised by**
d) an adjusting element (63) being provided by which it is possible to adjust
da) the axial position of the control edge unit (25), in particular of a sealing element (21) building the control edge, and of the distance element (20) and/or
db) a pretension of the control edge unit (25), in particular of a sealing element (21) building the control edge,
and
e) a securing element (24) being provided, wherein by the securing element (24) it is possible to secure the adjusting element (63) in different axial positions dependent from the set or adjusted axial position or pretension.

2. Valve (1) of claim 1, wherein the adjusting element is an adjusting element (63) being movable in axial direction, in particular an press-fitted element (64).

3. Valve (1) of claim 2, wherein it is possible to latch or lock the adjusting element (63) in different axial positions by a latching or locking device (65).

4. Valve (1) of claim 1, wherein the adjusting element (63) is a screw element or screwed element (23).

5. Valve (1) of claim 4, wherein the screw element or screwed element (23) is screwed in a direction coaxial to the valve slider (31) into an inner thread (16) of the recess (9) of the housing (3).

6. Valve (1) of claim 4 or 5, wherein at least one sliding element or at least one sliding ring (22) is interposed between a front side (27) of the screw element or screwed element (23) and a distance element (20) or a control edge unit (25).

7. Valve (1) of one of claims 4 to 6, wherein the screw element or screwed element (23) comprises a trapezoidal thread.

8. Valve (1) of one of claims 4 to 7, wherein a screwing angle of the screw element or screwed element (23) is secured by a securing element (24).

9. Valve (1) of claim 8, wherein the securing element (24) for avoiding a change of the screwing angle cooperates or engages with a positive lock both
a) with the screw element or screwed element (23) and
b) with the housing (3).

10. Valve (1) of claim 9, wherein the securing element (24) is built by a securing ring, wherein
a) an inner surface (48) of the securing ring having a non-circular cross section engages with a positive lock with an outer surface (46) of the screw element or screwed element (23) having a non-circular cross-section and
b) an outer surface (50) of the securing ring having a non-circular cross-section engages with a positive lock with an inner surface (51) of the housing (3) having a non-circular cross-section,
wherein
ca) the engagement with a positive lock between the inner surface (48) of the securing ring (24) and the outer surface (46) of the screw element or screwed element (23) is possible for different relative angles of rotation between the securing ring (24) and the screw element or screwed element (23) and/or
cb) the engagement with a positive lock between the outer surface (50) of the securing ring (24) and the inner surface (51) of the housing (3) is possible for different relative angles of rotation between the securing ring (24) and the housing (3).

11. Valve (1) of claim 10, wherein at least one outer surface (46, 50) or inner surface (48, 51) forms a toothing (62) or at least one protrusion (47) or recess (49).

12. Valve (1) of one of claims 8 to 11, wherein the securing element (24) is built by a latching device, snapping device or ratching device (55, 65).

13. Valve (1) of one of claims 1 to 12, wherein the control edge unit (25) is built with a sealing element (21) being held and/or pretensioned between two supporting ring discs (19), wherein in particular the sealing element (21) in a semi cross section has the shape of a barbell.

14. Valve (1) of one of claims 1 to 13, wherein the adjusting element (63) comprises a cylindrical inner surface (42), wherein a control piston (32) which actuates the valve slider (31) is sealingly guided by the cylindrical inner surface (42).

15. Valve (1) of one of claims 1 to 14, wherein a spring (44) which biases the valve slider (31) at least partially extends through the adjusting element (63).

16. Valve (1) of one of claims 1 to 15, wherein the housing (3), the valve slider (31) and/or the adjusting element (63) is/are made of plastic.

17. Valve (1) of one of claims 1 to 16, wherein the distance element (20) has a sleeve-like shape with radial recesses by which a part of a valve chamber (38, 39, 40) is formed.

18. Valve (1) of one of claims 1 to 17, wherein the valve is built by a 2/2-way valve (61) or a 3/2-way valve (51).

19. Valve (1) of one of claims 1 to 18, wherein a spring (44) which biases the valve slider is supported at a control piston (32) which biases the valve slider (31).

20. Method for assembling a valve (1) of claims 2 or 3 or one of claims 13 to 19 when referring back to claim 2 or 3, wherein the adjusting element (63) is pressed with a defined pressing force into the housing (3) such that independent from axial tolerances a defined axial pretension of at least one or the control edge unit (25), in particular a defined axial pretension of a sealing element (21) forming the control edge, is produced.

21. Method for assembling a valve (1) of one of claims 4 to 12 or one of claims 13 to 19 when referring back to one of claims 4 to 12, wherein the screw element or screwed element (23) is screwed into the housing (3) with a defined torsional moment such that independent from axial tolerances a defined axial pretension of at least one or the control edge unit (25), in particular of a sealing element (21) forming the control edge, is produced.

## Revendications

1. Valve pneumatique (1) du type à piston pour un système à air comprimé d'un véhicule utilitaire
a) ayant un coulisseau de valve (31) monté de façon à coulisser dans une direction axiale dans un évidement (9) d'un logement (3) et
b) ayant au moins deux chambres de valve (38, 39, 40),
c) dans laquelle
ca) dans une position axiale du coulisseau de valve (31), des chambres de valve (39, 40) adjacentes sont séparées l'une de l'autre par une arête de commande prenant appui de façon étanche sur une surface d'enveloppe (34) du coulisseau de valve (31),
cb) dans une autre position axiale du coulisseau de valve (31), les chambres de valve (39, 40) adjacentes sont reliées l'une avec l'autre par une dérivation (37), et
cc) l'arête de commande est formée avec une unité d'arête de commande (25) engagée dans l'évidement (9), dont la position axiale est prédéterminée au moyen d'un élément d'écartement (20),
**caractérisée**
d) **en ce qu'**il est prévu un élément de réglage (63) au moyen duquel
da) la position axiale de l'unité d'arête de commande (25), et en particulier d'un élément d'étanchéité (21) formant l'arête de commande, et de l'élément d'écartement (20) et/ou
db) une précontrainte de l'unité d'arête de commande (25), et en particulier d'un élément d'étanchéité (21) formant l'arête de commande
peut ou peuvent être réglées, et
e) **en ce qu'**il est prévu un élément de blocage (24) au moyen duquel l'élément de réglage (63) peut être bloqué dans différentes positions axiales en fonction de la position axiale ou de la précontrainte réglée.

2. Valve (1) selon la revendication 1, **caractérisée en ce que** l'élément de réglage est un élément de réglage mobile axial (63), et en particulier un élément d'emmanchage à force (64).

3. Valve (1) selon la revendication 2, **caractérisée en ce que** l'élément de réglage (63) peut être encliqueté dans différentes positions axiales par le biais d'un dispositif d'encliquetage ou de verrouillage (65).

4. Valve (1) selon la revendication 1, **caractérisée en ce que** l'élément de réglage (63) est un élément à vis (23).

5. Valve (1) selon la revendication 4, **caractérisée en ce que** l'élément à vis (23) est vissé en position coaxiale avec le coulisseau de valve (31) dans un filetage intérieur (16) de l'évidement (9) du logement (3).

6. Valve (1) selon la revendication 4 ou 5, **caractérisée en ce qu'**au moins un élément de glissement ou au moins un anneau de glissement (22) est agencé entre un côté frontal (27) de l'élément à vis (23) et un élément d'écartement (20) ou une unité d'arête de commande (25).

7. Valve (1) selon l'une des revendications 4 à 6, **caractérisée en ce que** l'élément à vis (23) possède un filetage trapézoïdal.

8. Valve (1) selon l'une des revendications 4 à 7, **caractérisée en ce qu'**un angle de vissage de l'élément à vis (23) est bloqué par un élément de blocage (24).

9. Valve (1) selon la revendication 8, **caractérisée en ce que** l'élément de blocage (24) coopère par assemblage de forme
a) aussi bien avec l'élément à vis (23)
b) qu'avec le logement (3)
afin de prévenir une modification de l'angle de vissage.

10. Valve (1) selon la revendication 9, **caractérisée en ce que** l'élément de blocage (24) est réalisé en tant que bague de blocage dont
a) la surface intérieure (48) ayant une section non circulaire coopère par assemblage de forme avec une surface d'enveloppe (46) de l'élément à vis (23) ayant une section non circulaire et
b) la surface extérieure (50) ayant une section non circulaire coopère par assemblage de forme avec une surface intérieure (51) du logement (3) ayant une section non circulaire,
étant entendu que
ca) la coopération par assemblage de forme entre la surface intérieure (48) de la bague de blocage (24) et la surface d'enveloppe (46) de l'élément à vis (23) est possible pour différents angles de rotation relatifs entre la bague de blocage (24) et l'élément à vis (23) et/ou
cb) la coopération par assemblage de forme entre la surface extérieure (50) de la bague de blocage (24) et la surface intérieure (51) du logement (3) est possible pour différents angles de rotation relatifs entre la bague de blocage (24) et le logement (3).

11. Valve (1) selon la revendication 10, **caractérisée en ce qu'**au moins une surface extérieure ou d'enveloppe (46, 50) ou une surface intérieure (48, 51) forme une denture (62) ou au moins une saillie (47) ou un évidement (49).

12. Valve (1) selon l'une des revendications 8 à 11, **caractérisée en ce que** l'élément de blocage (24) est réalisé en tant que dispositif d'encliquetage ou à cliquet (55, 65).

13. Valve (1) selon l'une des revendications précédentes, **caractérisée en ce que** l'unité d'arête de commande (25) est formée avec un élément d'étanchéité (21) maintenu et/ou précontraint entre deux rondelles de soutien (19), ayant en particulier une forme d'haltère dans sa demi-section.

14. Valve (1) selon l'une des revendications précédentes, **caractérisée en ce que** l'élément de réglage (63) possède une surface intérieure cylindrique (42) par rapport à laquelle un piston de commande (32) actionnant le coulisseau de valve (31) est guidé de façon étanche.

15. Valve (1) selon l'une des revendications précédentes, **caractérisée en ce qu'**un ressort (44) agissant sur le coulisseau de valve (31) s'étend au moins en partie à travers l'élément de réglage (63).

16. Valve (1) selon l'une des revendications précédentes, **caractérisée en ce que** le logement (3), le coulisseau de valve (31) et/ou l'élément de réglage (63) sont fabriqués en plastique.

17. Valve (1) selon l'une des revendications précédentes, **caractérisée en ce que** l'élément d'écartement (20) est réalisé en forme de douille avec des évidements radiaux avec lesquels une partie d'une chambre de valve (38, 39, 40) est formée.

18. Valve (1) selon l'une des revendications précédentes, **caractérisée en ce que** la valve est réalisée en tant que valve à 2/2 voies (61) ou valve à 3/2 voies (51).

19. Valve (1) selon l'une des revendications précédentes, **caractérisée en ce qu'**un ressort (44) agissant sur le coulisseau de valve prend appui sur un piston de commande (32) agissant sur le coulisseau de valve (31).

20. Procédé de montage d'une valve (1) selon la revendication 2 ou 3 ou l'une des revendications 13 à 19 par référence à la revendication 2 ou 3, **caractérisé en ce que** l'élément de réglage (63) est emmanché dans le logement (3) avec une force d'emmanchage définie, ce par quoi, indépendamment de tolérances axiales, une précontrainte axiale définie d'au moins une ou de l'unité d'arête de commande (25), et en particulier d'un élément d'étanchéité (21) formant l'arête de commande, est obtenue.

21. Procédé de montage d'une valve (1) selon l'une des revendications 4 à 12 ou 13 à 19 par référence à l'une des revendications 4 à 12, **caractérisé en ce que** l'élément à vis (23) est vissé dans le logement (3) avec un couple défini, ce par quoi, indépendamment de tolérances axiales, une précontrainte axiale définie d'au moins une ou de l'unité d'arête de commande (25), et en particulier d'un élément d'étanchéité (21) formant l'arête de commande, est obtenue.
